# EUROPEAN PATENT SPECIFICATION

(11) **EP 2 962 788 B1**
(45) Date of publication and mention of the grant of the patent: **07.08.2019**
(21) Application number: 15171746.9
(22) Date of filing: 11.06.2015
(51) Int. Cl.: B22D 23/06, B22F 3/18, B23P 9/02, B22F 3/105, B33Y 10/00

(54) **HYBRID ADDITIVE MANUFACTURING METHOD**
HYBRIDES SCHICHTWEISES HERSTELLUNGSVERFAHREN
PROCÉDÉ DE FABRICATION PAR MÉTHODE ADDITIVE HYBRIDE

(30) Priority: 17.06.2014 US 201462013286 P
(43) Date of publication of application: 06.01.2016
(73) Proprietor: United Technologies Corporation, Farmington, CT 06032 (US)
(72) Inventor: LIOU, Joe J., South Windsor, CT 06074 (US); KLECKA, Michael A., Vernon, CT 06066 (US); KUCZEK, Andrzej Ernest, Bristol, CT 06010 (US); El-WARDANY, Tahany Ibrahim, Bloomfield, CT 06002 (US); HOFFMAN, Lee A., Vernon, CT 06066 (US); VIENS, Daniel V., Mansfield Center, CT 06250 (US)
(74) Representative: Dehns

(56) References cited:
- EP-A1- 2 620 240
- EP-A1- 2 730 354
- WO-A1-2012/152259
- GB-A- 2 491 472
- US-A1- 2013 197 683

## Description

### BACKGROUND

The present invention relates to additive manufacturing, and more particularly, to additive manufacturing products and methods. Conventional machining relies on removal of material and is often limited in terms of part complexity. Additive manufacturing avoids many of these issues, resulting in the capability for producing near net shaped products with highly complex geometries.

Unfortunately, many conventional additive manufacturing techniques result in products with mechanical properties, such as hardness or ductility, only comparable to cast materials as opposed to more desirable wrought materials. Additionally, many of the products produced through conventional additive manufacturing may have tensile residual stresses throughout the product or may have an undesirable surface roughness making it difficult for an additional layer of additive material to bind to a previously formed layer of additive material. Also, parts formed from conventional additive manufacturing techniques may include layers with an oriented microstructure, which can weaken the product.

In order to address some of these undesirable properties, products formed by conventional additive manufacturing methods are subjected to significant post-processing and heat treatment, which yields varying degrees of success in achieving wrought performance. There is a need in the art for additive manufacturing methodologies that produce products with improved mechanical properties.

An additive manufacturing process having the features of the preamble of claim 1 is disclosed in EP 2730354 A1. Other additive manufacturing processes are disclosed in EP 2620240 A1, GB 2491472 A and WO 2012/152259 A1.

### SUMMARY

In accordance with the invention, there is provided an additive manufacturing method as set forth in claim 1.

The second layer of additive material may be deep rolled.

The step of deep rolling may include localized deep rolling.

Deep rolling at least one of the first and second layers of additive material may impart a residual stress to a depth of about 1 mm to about 1.5 mm.

Deep rolling the second layer of additive material may not substantially deform the first layer of additive material.

At least one of the first and second layers of additive material may be deep rolled to induce plasticity in the layer of additive material.

The step of forming the layers of additive material may be selected from the group consisting of powder deposition, laser engineered net shaping, powder-bed methods, electron-beam methods, wire feed techniques and combinations thereof.

The forming steps and the rolling steps may be performed sequentially.

The additive material may be selected from the group consisting of nickel alloys, titanium alloys, titanium, chromium alloys, stainless steel, steel, aluminum alloys, nickel-chromium alloys, and combinations thereof.

At least one of the layers of Inconel 718 may have a hardness ranging from 270 kg/mm² to about 425 kg/mm2.

At least one of the first and second layers may be deep rolled such that any anisotropic microstructure may be substantially reduced.

At least one of the first and second layers of additive material may be rolled such that it may have a surface roughness ranging from about 20 µin (0.00051 mm) to about 140 µin (0.00356 mm).

Deep rolling the at least one of the first and second layers of additive material may refine the microstructure of the layer.

A first portion of at least one of the first and second layers of the additive material may be deep rolled at a different pressure than second portion of the layer which may result in the first portion of the layer having a different hardness than the second portion of the layer.

At least one of the first and second layers of additive material may be deep rolled such that it may be substantially free of tensile residual stresses.

The crowned roller may include a flat section with a width from about 1 mm to about 5 mm.

The crowned roller may have a tip having a width from about 1 mm to about 5 mm.

At least one of the first and second layers of additive material may be deep rolled at a load ranging from about 2500 N to about 7000 N.

The step of forming the layers of additive material on a substrate may include melting a metal powder, forming a melt pool of the melted metal powder on the substrate and allowing the melt pool to solidify, and wherein the step of rolling comprises rolling the solidified melt pool.

A product may be formed according to the described method.

A product formed according to the described method may have at least on the first and second layers rolled such that any anisotropic microstructure is substantially reduced.

A product formed according to the described method may have at least one of the first and second layers of additive material rolled such that it is substantially free of tensile residual stresses.

At least one of the first and second layers of additive material may be deep rolled to produce an overlap on the layer.

### BRIEF DESCRIPTION OF THE DRAWINGS

FIG. 1 is a flow chart showing an embodiment of a manufacturing method to form a component.
FIG. 2A is a schematic diagram showing a first layer of additive material being formed on a substrate.
FIG. 2B is a schematic diagram showing the first layer of additive material being rolled.
FIG. 2C is a schematic diagram showing a second layer of additive material being formed on top of the first layer of additive material.
FIG. 2D is a schematic diagram showing the second layer of additive material being rolled.
FIG. 3 is a plan view of a deep rolling tool used to deep roll a layer of additive material.
FIG. 4 is a plan view showing an embodiment of a crowned roller.
FIG. 5 is a schematic diagram showing an embodiment of the rolling step.
FIG. 6 is a microphotograph showing a workpiece with deposited layers of additive material and their microstructure.

### DETAILED DESCRIPTION

Disclosed herein is an additive manufacturing method (also referred to herein as a 'hybrid additive manufacturing method') for forming a component. The method includes the step of forming a first layer of additive material on a substrate. This step is followed by rolling the first layer of additive material to induce plasticity in the first layer of additive material. This step is followed by forming a second layer of additive material on top of the first layer of additive material. This step is followed by rolling the second layer of additive material to induce plasticity in the second layer of additive material. This process has many benefits in additive manufacturing, including reducing the amount of residual tensile stress in a layer of additive material, adding compressive residual stresses to the layer of additive material, hardening each layer of additive material, creating a layer of additive material with a relatively smooth surface, and reducing the presence of an anisotropic microstructure in the layer of additive material.

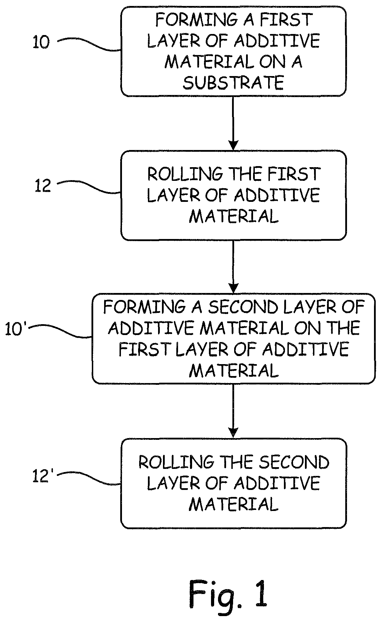

Fig. 1 shows one embodiment of a hybrid additive manufacturing. Step 10 includes forming a first layer of additive material on a substrate. The additive material can be one of many suitable materials used for additive manufacturing. Following formation step 10 is rolling step 12. Rolling step 12 includes rolling the first layer of additive material and can be accomplished with a deep rolling tool, which can be a component of an additive manufacturing machine. Formation step 10' follows rolling step 12. Formation step 10' includes forming a second layer of additive material on top of the first layer of additive material. Rolling step 12' follows formation step 10'. Rolling step 12' includes rolling the second layer of additive material and can be accomplished with the deep rolling tool. These steps can be repeated to form and roll additional layers of additive materials.

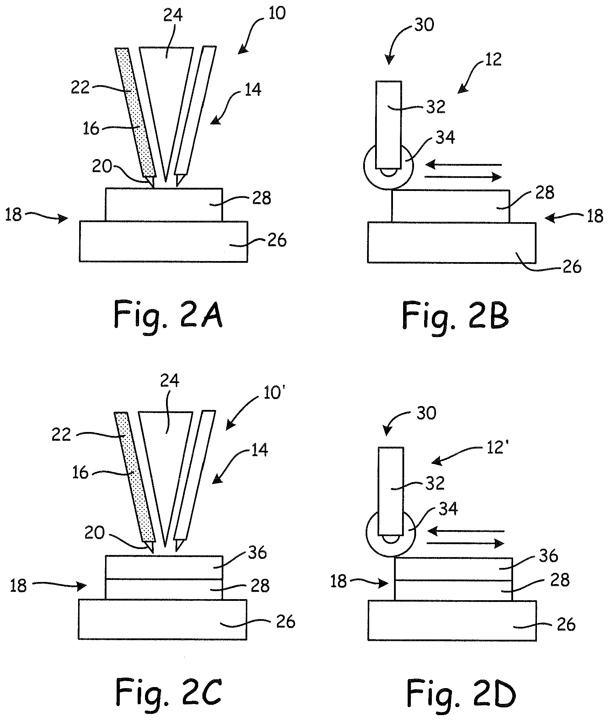

Figs. 2A-2D schematically illustrates one embodiment of a hybrid additive manufacturing method. Fig. 2A shows formation step 10. Fig. 2A further shows deposition tool 14, metallic powder 16, and workpiece 18. Deposition tool 14 includes powder nozzle 20, powder feed tube 22, and heat source 24. Deposition tool 14 is configured to be part of an additive manufacturing machine and can have a plurality of degrees of freedom (dof) (e.g., 3 dof, 5 dof, 6 dof). Workpiece 18 includes substrate 26 and first layer 28. Metallic powder 16 is fed through powder feed tube 22 to powder nozzle 20. Metallic powder 16 can include nickel alloys, titanium alloys, titanium, chromium alloys, nickel-chromium alloys (e.g. Inconel 718), aluminum alloys, stainless steel, and steel. Inconel 718 is one example of a nickel-chromium alloy. Metallic powder 16 exits powder nozzle 20 and is deposited on substrate 26. Substrate 26 can be a metallic or plastic build plane for metallic powder 16 to adhere to. Heat source 24 melts metallic powder 16 on substrate 26 which forms a melt pool on substrate 26. The melt pool solidifies and ultimately becomes first layer 28. First layer 28, as any other layer herein described, is a layer of additive material formed from metallic powder 16. In later formation steps, first layer 28 acts as a substrate. By depositing a specific amount of metallic powder 16, as directed by a computer program, deposition tool 14 is able to build first layer 28 with a specified thickness. The above described method of forming first layer 28 is powder deposition or laser engineered net shaping. One having skill in the art will readily understand that other additive manufacturing techniques could be used to form first layer 28 without departing from the scope of this disclosure.

Other additive manufacturing techniques that could be used to form first layer 28 include stereolithography techniques, powder bed techniques and wire feed techniques. Wire feed techniques can include welding and cold metal fusion. To form first layer 28 using stereolithography techniques, a platform is immersed in a photosensitive polymer resin. An ultraviolet light is positioned above the resin and activated. Upon exposure to the ultraviolet light, the exposed resin cures, thus creating a solid layer at a desired thickness. The solid layer can be rolled. The platform is then lowered and a new layer of resin is cured, thus creating a new layer at a desired thickness.

Powder bed methods are another additive manufacturing technique that would be suitable to form first layer 28. Powder bed methods use a bed of metallic powder that rests on top of a platform to form first layer 28. A heat source, such as a laser or electron beam, sinters or fuses the metallic powder over the platform. The fused layer becomes first layer 28. After first layer 28 is formed, the platform, along with first layer 28, lowers and un-fused powder fills in the void over first layer 28. That powder is then sintered or fused to form a second layer. Powder bed methods work well with metals as well as plastics, polymers, composites and ceramics. Wire feed techniques would also be suitable to form first layer 28. Wire feed techniques differ from powder based techniques in that a wire is fed into the heat source, as opposed to a metallic powder, and melted and solidified to form a layer of additive material.

Fig. 2B shows rolling step 12, workpiece 18, and deep rolling tool 30. Workpiece 18 includes substrate 26 and first layer 28. Deep rolling tool 30 includes tool holder 32 and crowned roller 34. In rolling step 12, first layer 28 is rolled by deep rolling tool 30. As with deposition tool 14, deep rolling tool 30 is configured to be part of an additive manufacturing machine and can have a plurality of degrees of freedom commensurate with deposition tool 14.

In operation, crowned roller 34 is pressed against the surface of first layer 28, which creates a pressure or point contact load on first layer 28. The point contact load can be localized on first layer 28 in that crowned roller 34 can span the entire width of first layer 28 or only a portion of the width of first layer 28. In other embodiments, crowned roller 34 can apply a point contact load only to selected regions of first layer 28. The amount of force that crowned roller 34 exerts onto first layer 28 can vary depending on the desired mechanical properties of first layer 28. The amount of force will also vary depending on the ability of the additive manufacturing machine to produce a certain load. For example, the amount of force can range from a load of about 2500 N to about 7000 N. Crowned roller 34 is then translated across the surface of first layer 28 while applying a point contact load to first layer 28. Based on the geometry of crowned roller 34, as described further below, the pressure or point contact load on first layer 28 will vary significantly for a given load.

First layer 28 can be rolled once or multiple times. Rolling first layer 28 multiple times can help to ensure uniform rolling of first layer 28. It is also possible to roll a first portion of first layer 28 at a different pressure than a second portion of first layer 28. Thus, as described further below, portions of first layer 28 may be formed with a higher hardness, different surface roughness, or substantially more refined microstructure than another portion of first layer 28. Accordingly, great precision in controlling the mechanical properties of first layer 28 are possible by rolling first layer 28, or any other layer in workpiece 18, either multiple times or selectively. Multiple crowned rollers 34 can be used in parallel to simultaneously roll first and second portions of first layer 28. This can speed up rolling step 12.

As deep rolling tool 30 is translated across the surface of first layer 28, crowned roller 34 imparts some plasticity to first layer 28 as a function of the point contact load or pressure created by crowned roller 34. As a result of the point contact load, crowned roller 34 locally penetrates the surface of first layer 28. The point contact load or pressure, however, does not alter the cross-sectional profile of the surface of first layer 28 or cause buckling or bulk deformation in workpiece 18. This is because the amounts of load used are typically smaller than those loads used in roll forming processes which produce gross deformation in the overall part being rolled (e.g. 50,000 N - 75,000 N). The level of penetration into first layer 28 can be less than 100 microns. It will be appreciated that the level of penetration through the surface of first layer 28 can be controlled and adjusted for different types of materials. For instance, if first layer 28 is comprised of a brittle material, or is thin (e.g. 2 mm), minimal penetration can be used. If, on the other hand, first layer 28 is comprised of a robust material, or is thick, deeper penetration can be used.

Fig. 2C shows the same components as Fig. 2A but additionally includes second layer 36. As shown with respect to Fig. 2C, after first layer 28 has been rolled, second layer 36 can be formed on top of first layer 28 in formation step 10'. The process can be identical to formation step 10 except that first layer 28 serves as the substrate for metallic powder 16. Second layer 36 can have the same thickness as first layer 28 or can have a different thickness. The combination of the plasticity induced in first layer 28 and the subsequent re-heating of first layer 28 during the deposition of second layer 36 can help refine the microstructure of first layer 28.

Fig. 2D shows the same components as Figs. 2B and illustrates rolling step 12'. In rolling step 12' second layer 36 is rolled by deep rolling tool 30 which imparts some plasticity to second layer 36. Rolling second layer 36 (or any subsequently deposited layer) does not substantially deform first layer 28 (or any previously deposited layer). The process of rolling step 12' can be identical to rolling step 12. Additional formation and rolling steps can be repeated sequentially to form workpiece 18. Workpiece 18 is formed from first layer 28, second layer 36 and any additionally formed layers. Workpiece 18, additionally, includes substrate 26. When no further layers are added to workpiece 18 a finished component is produced.

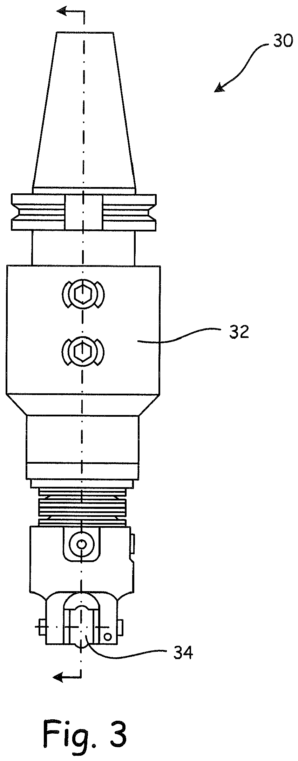

Fig. 3 shows an embodiment of deep rolling tool 30. Deep rolling tool 30 includes tool holder 32 and crowned roller 34. As discussed above, deep rolling tool 30 is configured to be part of an additive manufacturing machine and can have a plurality of degrees of freedom (dof) (e.g., 3 dof, 5 dof, 6 dof) which allows deep rolling tool 30 to be used to roll products with complex geometries. Deep rolling tool 30 can also be adapted to any machining spindle located within an additive manufacturing cell. Deep rolling tool 30 can also be tailored to suit the load carrying capacity of any additive manufacturing machine.

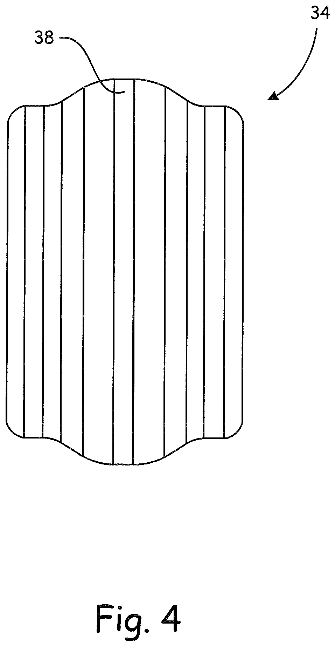

Fig. 4 shows an embodiment of crowned roller 34. Crowned roller 34 has a generally convex profile and includes tip 38. Tip 38 protrudes from the center of crowned roller 34. The geometry of tip 38 of crowned roller 34 can vary. For example, tip 38 can comprise a flat section with a width from about 1 mm to about 5 mm. In some embodiments, tip 38 can comprise a flat section with a width greater than 5mm. In other instances, tip 38 can comprise rounded regions having a varying radius (e.g. from about 0.25 mm to about 3 mm). Because the geometry of tip 38 is variable it can be adapted for high throughput rolling, or for rolling fine or complex structures. That is, tip 38 can be relatively large so it can roll over more surface area of first layer 28 (i.e. high throughput). If finer rolling is required, meaning imparting a greater point contact load onto a specific portion of first layer 28, then tip 38 can be narrow or have a sharp edge or be blunted. The variable geometry of tip 38 also allows for deep rolling additive manufacturing products with complex geometries such as a concave surface on the shoulder of a crankshaft. When first layer 28 is deep rolled tip 38 is the only portion of crowned roller 34 that contacts first layer 28.

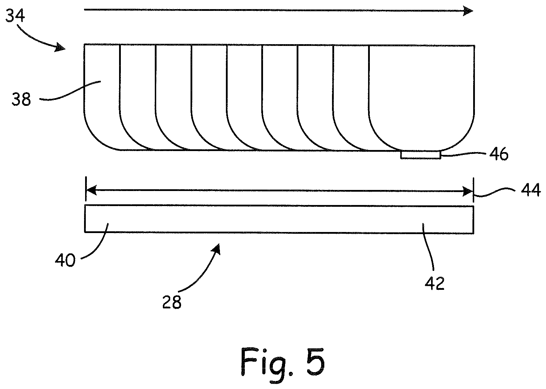

Fig. 5 is a schematic diagram showing an embodiment of rolling step 12. Fig. 5 shows tip 38 of crowned roller 34, first layer 28, first edge 40, and second edge 42. First edge 40 and second edge 42 define width 44 of first layer 28. Tip 38 has width 46 which is less than width 44 of first layer 28. Because tip 38, as shown in Fig. 5, has width 46 less than width 44 of first layer 28, different portions of first layer28 can be deep rolled across width 44. In operation, Tip 38 is applied to a portion of first layer 28 near first edge 40. That portion is rolled, as discussed more thoroughly above. Tip 38 is then raised from the surface of first layer 28 and indexed over, towards second edge 42, by a margin and applied to another portion of first layer 28 which is then rolled. As shown in Fig 5, if the margin tip 38 is indexed by is one half of width 46 a fifty percent overlap of rolling on first layer 28 is achieved. One having skill in the art will recognize that other overlaps such as 25 percent can be achieved using this process. This process is repeated until tip 38 reaches second edge 42. Rolling first layer 28 this way can help to produce a substantially uniform rolling across width 44. This process can also be applied to second layer 36 and any subsequently deposited layer of additive material.

Rolling first layer 28 (or any other layer forming workpiece 18) provides a number of benefits. Conventional additive manufacturing techniques often result in a workpiece having tensile residual stresses. A residual stress is a stress that remains in a solid material after the original cause of the stress has been removed. Tensile stress is a stress state that leads to expansion. Most layers formed by additive manufacturing contain tensile stresses. Tensile stresses may be desirable in some instances, but in many instances, such stresses are not. When a layer of additive material is formed, particularly by melting a metal, pockets of tensile stresses can form with uneven distribution in the layer. This is because heat taken up by the metal can cause localized expansion along the layer. When the layer cools, some areas of the layer cool and contract more than others which leaves different residual stresses within the layer. Because the propensity in additive manufacturing is to create tensile stresses, the residual stresses in first layer 28, if not rolled, are tensile stresses.

If, however, first layer 28 is rolled to impart plasticity in first layer 28, tensile residual stress is largely replaced by a uniform compressive residual stress. A compressive stress is essentially the opposite of a tensile stress in that, as opposed to a stress state leading towards expansion, this stress state leads to compression and a denser microstructure. The compressive residual stress can be imparted throughout the entire depth of first layer 28 or only to a select depth. For instance, if first layer 28 has a depth of 1.5 mm a compressive residual stress can be imparted through 1 mm of first layer 28 or thought the entire 1.5 mm. In addition to controlling the depth residual stresses are imparted to, crowned roller 34 can be locally applied to selected portions of first layer 28 to induce a specified amount of compressive stress in that selected portion. Compressive stresses can be beneficial in that they can confer resistance to metal fatigue and to some forms of stress corrosion. The compressive residual stress can also help to harden first layer 28. As first layer 28 is hardened, it loses ductility. If some pockets of tensile residual stress are desirable, then those pockets may be left in first layer 28 simply by not rolling them. In short the residual stresses in first layer 28 are subject to great control based on the location of first layer 28 that is rolled and the amount of point contact load applied thereto.

A particular benefit to hardening first layer 28 using deep rolling tool 30 is that different portions of first layer 28 can be selectively hardened. Great precision in constructing the final product is possible because the properties of hardening first layer 28, or any other layer with deep rolling tool 30, are predictable. If, for example, Inconel 718 constitutes first layer 28 the Vickers hardness measurement of that layer at about 2000 N to about 4000 N force applied (e.g. by deep rolling tool 30) can range from about 270 kg/mm2 to about 425 kg/mm². When workpiece 28 is comprised of a plurality of layers, the outermost layer has the highest hardness value with a decreasing hardness gradient of each deeper layer. This is because the re-heating that each layer is exposed to, when another layer is added to the layer(s) above it, decreases the hardness of that layer. Because the outermost layer is not subjected to any re-heating after it is rolled it has the highest hardness value. Yet another benefit of rolling first layer 28 is that rolling can help remove any anisotropic microstructure possessed by first layer 28. Anisotropy is the property of being directionally dependent. Absent rolling, the mechanical properties of first layer 28 include a degree of directionality.

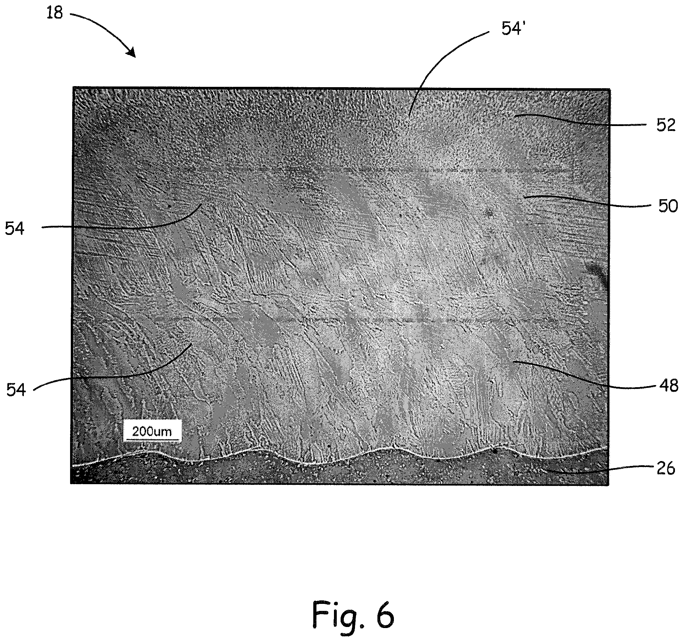

Fig. 6 is a microphotograph that shows workpiece 18 which consists of substrate 26 and three layers of additive material. Deposited layers 48 and 50 are not rolled. Deposited layer 52 is rolled. Fig. 6 further shows grains 54 which have an oriented microstructure and grains 54' which is substantially free of an oriented microstructure.

Deposited layers 48 and 50 are deposited without being rolled. As seen from Fig. 6, grain 54 is elongated substantially in the build direction (upward from substrate 26). The elongation of grain 54 in substantially one direction causes the anisotropic properties in deposited layers 48 and 50. As a result, one direction of deposited layers 48 and 50, for example, can be 20% stronger than another direction. Fig. 6 also shows deposited layer 52 which is rolled. The plasticity imparted to deposited layer 52 helps to substantially reduce the anisotropic microstructure of deposited layer 52 as can be seen from a lack of elongation in any direction of grains 54'. Thus the microstructure of deposited layer 52 is largely isotropic meaning the strength of deposited layer 52 is roughly the same in every direction.

Another benefit to rolling each layer is that the surface roughness of a rolled layer is smoother than a layer that is deposited and not rolled. For example, if first layer 28 is formed from Inconel 718 and is deposited and not rolled the surface roughness can range from about 300 µin (0.0076 mm) to about 900 µin (0.0229 mm). If, however, first layer 28 is rolled to impart plasticity to the layer, the surface roughness can improve to range from about 20 µin (0.00051 mm) to about 140 µin (0.00356 mm). This provides first layer 28 with a smooth and uniform surface (focal plane) for second layer 36 to form on. This helps to reduce the likelihood of defects between first layer 28 and second layer 36. Rolling also helps to remove loosely sintered particles that can cause defects during formation of second layer 36. Yet another benefit of the improved surface roughness of first layer 28 is that it can help to reduce the requirements for post-machining of workpiece 18.

While the invention has been described with reference to an exemplary embodiment(s), it will be understood by those skilled in the art that various changes may be made and equivalents may be substituted for elements thereof without departing from the scope of the invention accordingly to the claims. In addition, many modifications may be made to adapt a particular situation or material to the teachings of the invention without departing from the essential scope thereof according to the claims. Therefore, it is intended that the invention not be limited to the particular embodiment(s) disclosed, but that the invention will include all embodiments falling within the scope of the appended claims.

## Claims

1. An additive manufacturing method for forming a component, the method comprising:
forming a first layer of additive material (28) on a substrate (26);
deep rolling the first layer (28) of additive material; and
forming a second layer (36) of additive material on the first layer (28) of additive material; **characterised in that**:
a deep rolling tool (30) comprising a crowned roller (34) having a generally convex profile attached to a tool holder (32) is used to deep roll at least one of the first and second layers (28, 36) of additive material.

2. The additive manufacturing method of claim 1 and further comprising the step of:
deep rolling the second layer (36) of additive material.

3. The additive manufacturing method of claim 1 or 2, wherein the step of deep rolling includes localized deep rolling.

4. The additive manufacturing method of any preceding claim, wherein deep rolling at least one of the first and second layers (28, 36) of additive material imparts a residual stress to a depth of 1 mm to 1.5 mm in the layer (28, 36) of additive material.

5. The additive manufacturing method of any preceding claim, wherein deep rolling the second layer (36) of additive material does not deform the first layer (28) of additive material.

6. The additive manufacturing method of any preceding claim, wherein at least one of the first and second layers (28, 36) of additive material is deep rolled to induce plasticity in the layer (28, 36) of additive material.

7. The additive manufacturing method of any preceding claim, wherein the forming steps and the deep rolling step are performed sequentially.

8. The additive manufacturing method of any preceding claim, wherein at least one of the first and second layers (28, 36) is deep rolled such that any anisotropic microstructure is reduced.

9. The additive manufacturing method of any preceding claim, wherein deep rolling at least one of the first and second layers (28, 36) of additive material refines the microstructure of the layer.

10. The additive manufacturing method of any preceding claim, wherein at least one of the first and second layers (28, 36) of additive material is deep rolled such that it is free of tensile residual stresses.

11. The additive manufacturing method of any preceding claim, wherein a first portion of at least one of the first and second layers (28, 36) of the additive material is deep rolled at a different pressure than a second portion of the at least one layer (28, 36) resulting in the first portion having a different hardness than the second portion.

12. The additive manufacturing method of any preceding claim, wherein the crowned roller (34) has a tip (38) the tip (38) having a width from 1 mm to 5 mm.

13. The additive manufacturing method of any preceding claim, wherein the step of forming at least one of the first and second layers (28, 36) of additive material on a substrate (26) comprises:
melting a metal powder; and
forming a melt pool of the melted metal powder on the substrate (26) and allowing the melt pool to solidify, wherein the step of rolling comprises rolling the solidified melt pool.

14. The additive manufacturing method of any preceding claim, wherein at least one of the first and second layers (28, 36) of additive material is deep rolled to produce an overlap of deep rolled portions on the layer (28, 36).

## Patentansprüche

1. Schichtweises Herstellungsverfahren zum Fertigen einer Komponente, wobei das Verfahren Folgendes umfasst:
Herstellen einer ersten Schicht eines Additivmaterials (28) auf einem Substrat (26);
Festwalzen der ersten Schicht (28) des Additivmaterials; und
Herstellen einer zweiten Schicht (36) des Additivmaterials auf der ersten Schicht (28) des Additivmaterials; **dadurch gekennzeichnet, dass**:
ein Festwalzwerkzeug (30), das eine ballige Walze (34) umfasst, die ein im Allgemeinen konvexes Profil aufweist und an einem Werkzeughalter (32) angebracht ist, verwendet wird, um mindestens eine aus der ersten und der zweiten Schicht (28, 36) des Additivmaterials festzuwalzen.

2. Schichtweises Herstellungsverfahren nach Anspruch 1 und ferner folgenden Schritt umfassend:
Festwalzen der zweiten Schicht (36) des Additivmaterials.

3. Schichtweises Herstellungsverfahren nach Anspruch 1 oder 2, wobei der Schritt des Festwalzens lokal begrenztes Festwalzen umfasst.

4. Schichtweises Herstellungsverfahren nach einem der vorstehenden Ansprüche, wobei das Festwalzen mindestens einer aus der ersten und der zweiten Schicht (28, 36) des Additivmaterials eine Restspannung bis zu einer Tiefe von 1 mm bis 1,5 mm in der Schicht (28, 36) des Additivmaterials vermittelt.

5. Schichtweises Herstellungsverfahren nach einem der vorstehenden Ansprüche, wobei das Festwalzen der zweiten Schicht (36) des Additivmaterials die erste Schicht (28) des Additivmaterials nicht verformt.

6. Schichtweises Herstellungsverfahren nach einem der vorstehenden Ansprüche, wobei mindestens eine aus der ersten und der zweiten Schicht (28, 36) des Additivmaterials festgewalzt wird, um in der Schicht (28, 36) des Additivmaterials eine Formbarkeit herbeizuführen.

7. Schichtweises Herstellungsverfahren nach einem der vorstehenden Ansprüche, wobei die Herstellungsschritte und der Festwalzschritt nacheinander durchgeführt werden.

8. Schichtweises Herstellungsverfahren nach einem der vorstehenden Ansprüche, wobei mindestens eine aus der ersten und der zweiten Schicht (28, 36) so festgewalzt wird, dass jede anisotrope Mikrostruktur vermindert wird.

9. Schichtweises Herstellungsverfahren nach einem der vorstehenden Ansprüche, wobei das Festwalzen mindestens einer aus der ersten und der zweiten Schicht (28, 36) des Additivmaterials die Mikrostruktur der Schicht verfeinert.

10. Schichtweises Herstellungsverfahren nach einem der vorstehenden Ansprüche, wobei mindestens eine aus der ersten und der zweiten Schicht (28, 36) des Additivmaterials so festgewalzt wird, dass sie frei von Restzugspannungen ist.

11. Schichtweises Herstellungsverfahren nach einem der vorstehenden Ansprüche, wobei ein erster Abschnitt mindestens einer aus der ersten und der zweiten Schicht (28, 36) des Additivmaterials mit einem anderen Druck festgewalzt wird als ein zweiter Abschnitt der mindestens einen Schicht (28, 36), was dazu führt, dass der erste Abschnitt eine andere Härte als der zweite Abschnitt aufweist.

12. Schichtweises Herstellungsverfahren nach einem der vorstehenden Ansprüche, wobei die ballige Walze (34) eine Spitze (38) aufweist, wobei die Spitze (38) eine Breite von 1 mm bis 5 mm aufweist.

13. Schichtweises Herstellungsverfahren nach einem der vorstehenden Ansprüche, wobei der Schritt des Herstellens mindestens einer aus der ersten und der zweiten Schicht (28, 36) des Additivmaterials auf einem Substrat (26) Folgendes umfasst:
Schmelzen eines Metallpulvers; und
Herstellen eines Schmelzbads des geschmolzenen Metallpulvers auf dem Substrat (26) und Erstarrenlassen des Schmelzbads, wobei der Schritt des Walzens das Walzen des erstarrten Schmelzbads umfasst.

14. Schichtweises Herstellungsverfahren nach einem der vorstehenden Ansprüche, wobei mindestens eine aus der ersten und der zweiten Schicht (28, 36) des Additivmaterials festgewalzt wird, um eine Überlappung von festgewalzten Abschnitten auf der Schicht (28, 36) zu erzeugen.

## Revendications

1. Procédé de fabrication par méthode additive destiné à former un composant, le procédé comprenant :
la formation d'une première couche de matériau additif (28) sur un substrat (26) ;
le cylindrage de la première couche (28) de matériau additif ; et
la formation d'une seconde couche (36) de matériau additif sur la première couche (28) de matériau additif ; **caractérisé en ce que** :
un outil de cylindrage (30) comprenant un rouleau bombé (34) ayant un profil sensiblement convexe fixé à un porte outil (32) est utilisé pour cylindrer au moins l'une de la première et de la seconde couches (28,36) de matériau additif.

2. Procédé de fabrication par méthode additive selon la revendication 1 et comprenant en outre l'étape consistant à :
cylindrer la seconde couche (36) de matériau additif.

3. Procédé de fabrication par méthode additive selon la revendication 1 ou 2, dans lequel l'étape de cylindrage inclut un cylindrage localisé.

4. Procédé de fabrication par méthode additive selon une quelconque revendication précédente, dans lequel le cylindrage d'au moins une de la première et de la seconde couches (28, 36) de matériau additif engendre une contrainte résiduelle à une profondeur allant de 1 mm à 1,5 mm dans la couche (28, 36) de matériau additif.

5. Procédé de fabrication par méthode additive selon une quelconque revendication précédente, dans lequel le cylindrage de la seconde couche (36) de matériau additif ne déforme pas la première couche (28) de matériau additif.

6. Procédé de fabrication par méthode additive selon une quelconque revendication précédente, dans lequel au moins l'une de la première et de la seconde couches (28, 36) de matériau additif est cylindrée pour apporter de la plasticité dans la couche (28, 36) de matériau additif.

7. Procédé de fabrication par méthode additive selon une quelconque revendication précédente, dans lequel les étapes de formation et l'étape de cylindrage sont réalisées de manière séquentielle.

8. Procédé de fabrication par méthode additive selon une quelconque revendication précédente, dans lequel au moins l'une de la première et de la seconde couches (28, 36) est cylindrée de sorte que toute microstructure anisotrope est réduite.

9. Procédé de fabrication par méthode additive selon une quelconque revendication précédente, dans lequel le cylindrage d'au moins l'une de la première et de la seconde couches (28, 36) de matériau additif raffine la microstructure de la couche.

10. Procédé de fabrication par méthode additive selon une quelconque revendication précédente, dans lequel au moins l'une de la première et de la seconde couches (28, 36) de matériau additif est cylindrée de sorte qu'elle est exempte de contrainte résiduelle de traction.

11. Procédé de fabrication par méthode additive selon une quelconque revendication précédente, dans lequel une première partie d'au moins l'une de la première et de la seconde couches (28, 36) de matériau additif est cylindrée à une pression différente qu'une seconde partie de l'au moins une couche (28, 36) résultant en ce que la première partie présente une dureté différente de celle de la seconde partie.

12. Procédé de fabrication par méthode additive selon une quelconque revendication précédente, dans lequel le rouleau bombé (34) présente une pointe (38), la pointe (38) ayant une largeur allant de 1 mm à 5 mm.

13. Procédé de fabrication par méthode additive selon une quelconque revendication précédente, dans lequel l'étape de formation d'au moins l'une de la première et de la seconde couches (28, 36) de matériau additif sur un substrat (26) comprend :
la fusion d'une poudre métallique ; et
la formation d'une masse fondue de poudre métallique fondue sur le substrat (26) et le fait de laisser la masse fondue se solidifier, dans lequel l'étape de cylindrage comprend le cylindrage de la masse fondue solidifiée.

14. Procédé de fabrication par méthode additive selon une quelconque revendication précédente, dans lequel au moins l'une de la première et de la seconde couches (28, 36) de matériau additif est cylindrée pour produire un chevauchement de parties cylindrées sur la couche (28, 36).
